# EUROPÄISCHE PATENTANMELDUNG

(11) **EP 4 418 184 A1**
(43) Veröffentlichungstag der Anmeldung: **21.08.2024**
(21) Anmeldenummer: 23156867.6
(22) Anmeldetag: 15.02.2023
(51) Int. Cl.: G06Q 10/20, G05B 23/02

(54) **CHARAKTERISIEREN EINER TECHNISCHEN FEHLFUNKTION IN EINEM DATENVERLAUF**

(71) Anmelder: Siemens Mobility GmbH, 81739 München (DE)
(72) Erfinder: Braband, Jens, 38106 Braunschweig (DE)
(74) Vertreter: Siemens Patent Attorneys

(57) **Zusammenfassung**

Es wird ein computer-implementiertes Verfahren beschrieben zum Charakterisieren eines Datensatzes (100), insbesondere im Bereich der Schienen-gebundenen Fahrzeuge, das Verfahren aufweisend:
i) Identifizieren einer Mehrzahl von Datenmustern (110-113), wobei jedes Datenmuster (110-113) für zumindest einen spezifischen Datenverlauf indikativ ist;
ii) Bereitstellen von dem, insbesondere gemessenen, Datensatz (100), welcher einen Datenverlauf betreffend eine technische Funktion betrifft;
iii) Transformieren (120) des Datensatzes (100) zu den Datenmustern (110-113) der Mehrzahl von Datenmustern und dadurch Bestimmen der jeweiligen Abweichung;
iv) Zuordnen (130) des Datensatzes (100) zu einem Datenmuster der (110-113) Mehrzahl von Datenmustern basierend auf der bestimmten Abweichung; und
v) Charakterisieren (140) des Datensatzes (100) basierend auf der Zuordnung.

## Beschreibung

Die Erfindung bezieht sich auf ein Computer-implementiertes Verfahren zum Charakterisieren eines Datensatzes basierend auf der Transformation des Datensatzes zu einer Mehrzahl von Datenmustern. Bei dem Datensatz kann es sich insbesondere um einen Datenverlauf aus dem Bereich der Schienen-gebundenen Infrastruktur handeln, z.B. der Stromverbrauch eines Weichenantriebs in einer Zeitperiode bzw. Zeitreihe. Ferner bezieht sich die Erfindung auf eine Vorrichtung zur Datenverarbeitung und ein Computerprogrammprodukt.

Die Erfindung kann sich somit auf das technische Gebiet der Bewertung von Datensätzen beziehen, insbesondere im Hinblick auf Schienenfahrzeuge.

Eine Vielzahl von technischen Funktionen kann mittels Datensätzen beschrieben werden. Entsprechend können auch Fehlfunktionen bzw. Defekte dieser Funktionen mittels der Datensätze identifiziert werden. Der Informationsgehalt eines Datensatzes kann sich insbesondere aus einem bestimmten Datenverlauf erschließen. Dies kann z.B. ein Zeitverlauf bzw. eine Zeitreihe sein. In einer Zeitreihe werden die Daten des Datensatzes entlang einer Zeitperiode aufgezeichnet, bei einer Binärzeitreihe z.B. als Binärdaten (z.B. 1 und 0 bzw. *"*Signal*"* und *"*kein Signal*"*). Ein praktisches Beispiel hierfür kann ein Achszähler (binäre Achszählungsdaten) sein, welcher im Bereich der Schienenfahrzeuge weit verbreitet ist.

Fehlfunktionen innerhalb eines Datenverlaufs (insbesondere Zeitreihen) können in vielen Fällen von einem technischen Experten intuitiv erkannt werden. Entsprechend kann ein solcher technischer Experte die Fehlfunktionen bei Begutachtung intuitiv erkennen/erklären. Allerdings ist der Einsatz von technischen Experten zur Begutachtung meist mit erheblichem (Kosten-) Aufwand verbunden. Beispielsweise müssen im Bereich der Schienen-gebundenen Infrastruktur gewöhnlich größere Distanzen zurückgelegt werden, um dann an häufig schwer bzw. nur unter Gefahr zugänglichen Orten die Inspektion vorzunehmen. Ein praktisches Beispiel kann hier ein Weichenantrieb sein.

Es kann daher wünschenswert sein, das Charakterisieren von technischen Fehlfunktionen zumindest teilweise zu automatisieren. Hierbei besteht jedoch die Problematik, dass sich Computerprogramme, auch wenn sie mit künstliche Intelligenz (KI) Algorithmen ausgestattet sind, generell äußerst schwer damit tun, intuitive Beobachtungen durchzuführen. Stattdessen geben konventionelle Automatisierungen lediglich gemessene Daten aus, die dann von technischen Experten, insbesondere intuitiv, erklärt werden müssen.

Es könnte ein Bedarf bestehen, einen Datensatz (insbesondere bezüglich einer technischen Fehlfunktion) auf effiziente und zuverlässige Weise zu charakterisieren.

Ein Verfahren, eine Vorrichtung zur Datenverarbeitung, und ein Computerprogrammprodukt werden im Folgenden beschrieben.

Gemäß einem ersten Aspekt der Erfindung wird ein, insbesondere computer-implementiertes, Verfahren beschrieben zum Charakterisieren/Beschreiben eines Datensatzes (insbesondere im Bereich der Schienen-gebundenen Infrastruktur/Fahrzeuge bzw. im Bahnbereich), das Verfahren aufweisend:
i) Identifizieren (Vor-Charakterisieren) einer Mehrzahl von Datenmustern (z.B. Datenverläufen, insbesondere Zeitreihen), wobei jedes Datenmuster für zumindest einen spezifischen Datenverlauf indikativ ist (z.B. ideal, zu langsam, zu schnell, unvollständig, etc.);
ii) Bereitstellen von dem (insbesondere gemessenen oder simulierten) Datensatz, welcher einen Datenverlauf aufweist der eine technische Funktion betrifft (z.B. der Stromverbrauch eines Weichenantriebs über eine Zeitperiode);
iii) Transformieren (bzw. Vergleichen, z.B. mittels eines DTW Algorithmus) des Datensatzes (jeweils) zu den Datenmustern der Mehrzahl von Datenmustern und dadurch Bestimmen der jeweiligen Abweichung;
iv) Zuordnen des Datensatzes zu einem Datenmuster der Mehrzahl von Datenmustern basierend auf der bestimmten Abweichung (insbesondere Zuordnen des Datensatzes zu dem Datenmuster mit der geringsten Abweichung); und
v) Charakterisieren des Datensatzes basierend auf der Zuordnung (insbesondere der Vor-Charakterisierung die für das jeweilige Datenmuster bereits erstellt wurde; z.B. Beschreiben mittels eines Bewertungskriteriums, welches für das zugeordnete Datenmuster hinterlegt ist).

Gemäß einem zweiten Aspekt der Erfindung wird eine Vorrichtung zur Datenverarbeitung beschrieben, welche zumindest einen Prozessor aufweist, und welche eingerichtet das oben beschriebene Verfahren auszuführen.

Gemäß einem dritten Aspekt der Erfindung wird ein Computerprogrammprodukt beschrieben, welches Befehle aufweist, die bei der Ausführung des Programms durch einen Computer diesen veranlassen, das oben beschriebene Verfahren auszuführen.

Im Kontext dieses Dokuments kann sich der Begriff *"*Datensatz*"* insbesondere auf eine Mehrzahl von Daten (-Punkten) beziehen. Die Daten (z.B. Zeitreihen) können auch mehrdimensional sein. Insbesondere stehen diese Daten in Zusammenhang mit einer technischen Funktion und können daher über einen *"*Datenverlauf*"* indikativ für die technische Funktion sein. Beispielsweise kann der Datenverlauf eines Stromverbrauchs als Zeitreihe dargestellt werden, wobei zu verschiedenen Zeiten unterschiedliche Strommengen abgenommen werden. Anhand dieses Datenverlaufs kann die technische Funktion beschrieben werden und Fehlfunktionen können aus dem Datenverlauf erkannt werden.

Im Kontext dieses Dokuments kann sich der Begriff *"*Datenmuster*"* insbesondere auf einen Datensatz (insbesondere einen Datenverlauf) beziehen, welcher bereits bewertet/charakterisiert wurde, und somit als charakteristischer (spezifischer) Datenverlauf hinterlegt ist. Ein solches Datenmuster kann mit einem (gemessenen/simulierten) Datensatz verglichen werden (insbesondere durch eine Transformation der Datenpunkte, z.B. mittels DTW), um die Ähnlichkeit der Datensätze festzustellen. Bei einer gewissen Ähnlichkeit kann der Datensatz einem bestimmten Datenmuster zugeordnet werden, so dass Aussagen, welche auf das Datenmuster zutreffen, auch auf den zu charakterisierenden Datensatz zutreffen. In anderen Worten wird der Datensatz dadurch charakterisiert, dass er mit bereits charakterisierten Datensätzen verglichen wird.

Gemäß einem exemplarischen Ausführungsbeispiel kann die Erfindung auf der Idee basieren, dass ein Datensatz (insbesondere bezüglich eines technischen Defekts) auf effiziente und zuverlässige Weise charakterisierbar ist, wenn er mittels (Daten-) Transformation mit einer Mehrzahl von identifizierten (bereits charakterisierten) Datensätzen (bzw. Datenmustern) verglichen wird, und zumindest einem dieser Datenmuster zugeordnet wird. Basierend auf der bereits vorhandenen Charakterisierung des Datenmusters kann dann eine allgemein verständliche Information bezüglich des Datensatzes ausgegeben werden, insbesondere können Informationen bezüglich eines technischen Defekts verständlich ausgegeben werden. Solch klare Informationen bezüglich einer Fehlfunktion können (zumindest teilweise) die intuitiven Beobachtungen eines technischen Experten ersetzen bzw. ergänzen. Dadurch kann eine effiziente und doch zuverlässige Automatisierung bereitgestellt werden, welche den (Kosten-) Aufwand, insbesondere im Bahnbereich, signifikant senken könnte.

Gemäß einem Ausführungsbeispiel weist der Datenverlauf des Datensatzes eine technische Fehlfunktion bzw. einen technischen Defekt) auf. Gemäß einem weiteren Ausführungsbeispiel weist das Charakterisieren auf: Charakterisieren der technischen Fehlfunktion. Dies kann den Vorteil haben, dass ein Defekt in einer technischen Funktion effizient und zuverlässig entdeckt und auch beschrieben werden kann.

Beispielsweise können sich ein oder mehr Datenmuster auf einen speziellen Datenverlauf beziehen, der mit einem bekannten Defekt assoziiert ist. In einem anschaulichen Beispiel kann ein Stromverbrauch eines Weichenantriebs verglichen mit einem idealen Datenverlauf einen Datenverlauf aufweisen, der in einer Zeitperiode zu viel, zu wenig, oder gar keinen Strom abnimmt. Solche Unregelmäßigkeiten können direkt auf Fehler hindeuten, welche ein technischer Experte intuitiv erkennen könnte. Mittels des beschriebenen Verfahrens kann ein solches Erkennen/Charakterisieren eines technischen Defekts aber auch (im Wesentlichen) automatisch erfolgen.

Gemäß einem weiteren Ausführungsbeispiel weist das Verfahren ferner auf: Ausgeben der Charakterisierung. Eine solche Ausgabe kann z.B. in Textform und/oder Sprachform erfolgen. Weiterhin kann die Ausgabe eine Information enthalten, die mit einer menschlichen (bzw. menschlich generierten) Information vergleichbar ist. Dies kann den Vorteil haben, dass eine klar verständliche Informationsausgabe bzw. Fehlermeldung erfolgt, die mit einer Experten-Meinung vergleichbar sein kann und/oder auch von Nicht-Experten verstanden werden kann.

Die Begriffe *"*menschliche Information*"*, *"*von Menschen ausgegebene Information*"*, *"*menschlich-generierte Information*"* können hier synonym verwendet werden und sich insbesondere auf eine (ausgegebene) Information beziehen, die in menschlicher Sprache formuliert bzw. für Menschen direkt (semantisch) verständlich ist. In anderen Worten wird kein Maschinencode oder ein nicht weiter spezifizierter Begriff wie *"*Fehlermeldung*"* ausgegeben. Stattdessen kann ein Operator (sei es ein technischer Experte oder ein nicht-Experte) die Information aufnehmen und verstehen, als wäre sie von einem Menschen ausgegeben worden. Damit kann er den Sachverhalt erfassen und entsprechende Reaktionen in die Wege leiten. Ein konkretes Beispiel für eine von einem Menschen ausgegebene Information ist z.B. *"*Prüfung mit guter Verlässlichkeit korrekt durchgeführt*"*, *"*Prüfung mit sehr hoher Verlässlichkeit nicht korrekt ausgeführt, Fehler entspricht keinem bekannten Muster*"*. Eine solche Informationsausgabe, welche den Eindruck erweckt, dass ein Mensch sie generiert hat, kann basierend auf den identifizierten Datenmustern vorgefertigt sein. In einem Beispiel kann die Ausgabe nicht von einer menschlichen Ausgabe unterschieden werden. In einem weiteren Beispiel fertigt eine Software, insbesondere eine KI, die Informationsausgabe basierend auf einem Imitieren der menschlichen Sprache an (ähnlich wie ein Chatbot, z.B. ChatGPT).

Gemäß einem weiteren Ausführungsbeispiel weist das Transformieren einen Dynamic Time Warping (DTW) Algorithmus und/oder einen Optimal Transport Theory (OTT) Algorithmus auf. Hierbei handelt es sich um etablierte und erprobte Verfahren, welche direkt und zuverlässig einsetzbar sind.

Unter der *"*Optimal Transport Theory*"* wird in dem Kontext dieses Dokuments insbesondere ein klassisches mathematisches Problem verstanden, bei welchem eine gegebene Anfangsverteilung in eine gewünschte Zielverteilung transformiert wird. Der optimale Transport ist dabei diejenige Transformation, welche eine definierte Kostenfunktion (geringster Aufwand) minimiert. In der Literatur wird häufig die Analogie eines Sandhaufens (Quellverteilung) und einer Grube (Zielverteilung) verwendet, wobei der Sand unter Aufbringung einer möglichst geringen mechanischen Arbeit (Gewichtskraft mal Transportstrecke) vom Haufen in die Grube befördert werden soll.

*"*DTW*"* kann im Kontext dieses Dokument insbesondere einen Algorithmus bezeichnen, welcher eine optimale Angleichung zweier Zeitreihen ermöglicht, sodass die übereinstimmenden Bereiche der beiden Zeitreihen gefunden und aufeinander transformiert werden können. Auf Basis dieser Angleichung kann die Ähnlichkeit dieser Zeitreihen auf folgende Art und Weise quantifiziert werden (ebenfalls oft als Kosten bezeichnet): In der Standardversion von DTW ergibt sich die Kostenfunktion (der Aufwand) allein durch die Differenz der Funktionswerte von aufeinander projizierten Wertepaaren zwischen den Zeitreihen. Bei Binärzeitreihen entstehen z.B. Kosten bei den Abbildungen der Funktionswerte (0 → 1) und (1 → 0), wohingegen die Abbildungen der Funktionswerte (0 → 0) und (1 → 1) kostenfrei bleiben.

Gemäß einem weiteren Ausführungsbeispiel weist das Verfahren, insbesondere das Transformieren und/oder das Charakterisieren, das Verwenden eines künstliche Intelligenz (KI) Algorithmus auf. Dies kann den Vorteil haben, dass die Algorithmen kontinuierlich verbessert werden können, wodurch dann auch das Gesamtergebnis zuverlässiger werden kann.

Gemäß einem weiteren Ausführungsbeispiel werden die Datensätze und/oder Datenmuster (und/oder Mittelwerte, siehe unten) als Trainingsdaten verwendet. Insbesondere im Bereich der Schienenfahrzeuge können die Anforderungen an die Zuverlässigkeit von Daten besonders hoch sein. Gleichzeitig kann aber ein erhöhter Bedarf an solchen Daten bestehen, da oftmals gemessene bzw. charakterisierte Daten als Trainingsdaten nicht im ausreichenden Umfang vorhanden sind. Gerade diese Trainingsdaten können aber wiederum von besonderer Wichtigkeit sein, um eine akzeptable Zuverlässigkeit des zu trainierenden Algorithmus, insbesondere eines KI Algorithmus, zu ermöglichen. Gemäß einem weiteren Ausführungsbeispiel werden die Trainingsdaten an einen künstliche Intelligenz (KI) Algorithmus bereitgestellt.

Im Kontext dieses Dokuments kann der Begriff *"*KI*"* sich insbesondere auf Computer-basierte Ansätze zur Nachahmung kognitiver Funktionen eines menschlichen Geistes beziehen, insbesondere Lernen und Problemlösung. Es wurde eine Vielzahl verschiedener mathematischer Algorithmen und Berechnungsmodelle entwickelt, um KI-Funktionalitäten zu implementieren, beispielsweise *"*maschinelles Lernen*"*, *"*deep learning*"*, neuronale Netzwerke, genetische Algorithmen, Kernel Regression, etc. Der Hauptzweck dieser Ansätze kann darin gesehen werden, einen vorhandenen Algorithmus zu verbessern, indem er mit Trainingsdaten trainiert wird, so dass ein Lerneffekt auftritt und sich die Problemlösungsfähigkeit des Algorithmus im Laufe der Zeit verbessert. Dies kann mit oder ohne menschliches Eingreifen (z.B. Verbessern) geschehen.

Gemäß einem weiteren Ausführungsbeispiel weist der Datensatz (bzw. der Datenverlauf) eine Zeitreihe auf, insbesondere betreffend zumindest eines von: Stromverbrauch (z.B. von Weichenantrieb, Schrankenantrieb, etc.) Achszähler, Klimaanlage (von Zügen), Temperaturverlauf (in Wagons), Lüftung (von Reisezugwagen). Dies kann den Vorteil haben, dass Datensätze betreffend wirtschaftlich relevante technische Funktionen, insbesondere aus dem Bahnbereich, mittels dem beschriebenen Verfahren charakterisiert werden können.

Gemäß einem weiteren Ausführungsbeispiel weist die Mehrzahl von Datenmustern zumindest einen Datenverlauf bezüglich einem der folgenden Ereignisse auf: einem idealen/erwünschten Ereignis, keinem Ereignis, einem zu langsamen Ereignis, einem zu schnellen Ereignis, einem unvollständigen Ereignis. Dies kann den Vorteil haben, dass spezifische (insbesondere typische) Defekte mittels Abgleichens schnell und zuverlässig erkannt und beschrieben werden können.

Gemäß einem weiteren Ausführungsbeispiel ist jedes Datenmuster der Mehrzahl von Datenmustern mit einem Bewertungskriterium, insbesondere einem Sicherheitskriterium, assoziiert. Gemäß einem weiteren Ausführungsbeispiel umfasst jedes Bewertungskriterium einen Bewertungsbereich, wobei die Bewertungsbereiche (im Wesentlichen) nicht überlappen oder zumindest teilweise überlappen. Dies kann den Vorteil haben, dass jedes Datenmuster direkt mit einem Kriterium gekoppelt ist, so dass eine Aussage bezüglich (der Qualität) des abgeglichenen Datensatzes ermöglicht ist. Damit kann man eine sofortige Information dahingehend erhalten, ob der zu charakterisierende Datensatz zuverlässig ist bzw. welche Art von Fehler (höchstwahrscheinlich) vorliegt.

Gemäß einem weiteren Ausführungsbeispiel weist das Identifizieren der Datenmuster auf: Auswerten von modellierten und/oder gemessenen Datensätzen. Die Datenmuster müssen zunächst charakterisiert werden. Dies kann basierend auf modellierten/simulierten Daten und/oder gemessenen Daten durchgeführt werden. Je genauer die Identifizierung, desto zuverlässiger kann der Datensatz später charakterisiert werden.

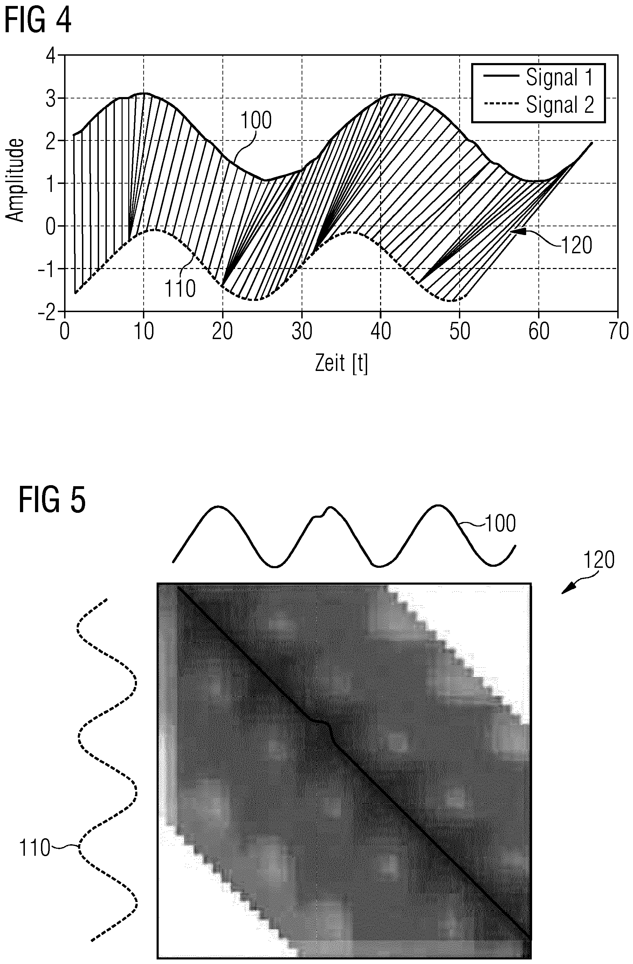

Gemäß einem weiteren Ausführungsbeispiel betrifft das Transformieren (im Wesentlichen) die Form des jeweiligen Datenverlaufs. Dies kann den Vorteil haben, dass die wichtige/wesentliche Information (nämlich die Form des Datenverlaufs) im Vordergrund steht, anstelle von weniger wichtigen/wesentlichen Informationen wie Länge, Höhe, Größe usw. des Datenverlaufs. Ist der Datenverlauf z.B. in Form einer Kurve vorhanden, so kommt es auf den Verlauf der Wendepunkte an (siehe zum Vergleich Figur 4).

Gemäß einem weiteren Ausführungsbeispiel weist das Transformieren ferner auf: Abgleichen/Übertragen/ Transformieren von dem Datensatz und/oder von zumindest einem Datenmuster auf eine gemeinsame Basis, insbesondere bezüglich Zeit und/oder Ort. Dadurch kann die Qualität des Transformierens verbessert werden.

Gemäß einem weiteren Ausführungsbeispiel weist das Transformieren ferner auf: Unterdrücken von einem Teil von dem Datensatz und/oder von zumindest einem Datenmuster, insbesondere zu Beginn und/oder zum Ende des Datenverlaufs. Dadurch kann die Qualität des Transformierens verbessert werden. Das Transformieren (insbesondere DTW) kann z.B. beschränkt werden mittels eines Parameters, oft psi genannt, welcher bestimmt, wie viele Datenpunkte am Beginn und/oder Ende unterdrückt werden können, um Fehlsynchronisationseffekte auszugleichen.

Gemäß einem weiteren Ausführungsbeispiel weist das Transformieren ferner auf: Beschränken des maximalen Umfangs des Transformierens. Dadurch kann die Qualität des Transformierens verbessert werden. Je geringer ein Fenster (für maximalen Umfang) gewählt wird, desto stärker wird eine exakte Übereinstimmung erzwungen. Der Wert des Fensters wird z.B. auf Grundlage von Kenntnissen über die akzeptablen Abweichungen für die Anwendung ermittelt.

Gemäß einem weiteren Ausführungsbeispiel weist das Verfahren ferner auf: Bilden eines Mittelwerts, insbesondere basierend auf den Abweichungen (von einem erwünschten Datenmuster), insbesondere um dadurch eine charakteristische Fehlfunktion, weiter insbesondere den Datenverlauf der technischen Fehlfunktion, zu bestimmen. Dies kann den Vorteil haben, dass ohne Zusatzaufwand ein mittlerer Defekt, in anderen Worten ein typischer Defekt, identifiziert werden kann. Von diesem Defekt kann auf einen (mittleren) Verschleiß geschlossen werden, so dass entsprechende Bauteile weiter verbessert werden können.

In einem exemplarischen Ausführungsbeispiel können Aspekte der vorliegenden Erfindung auch wie folgt beschrieben werden: Es soll eine Lösung skizziert werden, die die Eigenschaften eines Daten-Transformation Algorithmus wie 1NN-DTW (1 Nearest Neighbour - Dynamic Time Warping) ausnutzt, aber gleichzeitig Erklärungen in natürlicher Sprache liefern kann. Dazu werden ein oder mehrere Idealkurven (Datenmuster) über eine bestimmte Länge vorgegeben, die eine bestimmte Bedeutung haben (z.B. ein Prozess der zyklisch zurückgesetzt werden soll, anschaulich könnte diese einer Leerung, Prüfung o. ä. entsprechen). Genauso werden ein oder mehrere typische Abweichungen (Datenmuster) definiert, z.B. keine Leerung, zu langsame Leerung, unvollständige Leerung, etc. Diese typischen Datenmuster werden vorab bestimmt, z.B. aus physikalischen Modellen, Messdaten (z.B. durch DTW-Averaging o.a.). In einem Beispiel entspricht jedes Datenmuster einem Datenpunkt in einem hochdimensionalen (Zeitreihen-) Datenraum. Zu jedem Datenmuster wird in einem Beispiel zur DTW-Distanz ein *"*Einzugsbereich*"* definiert, der sich mit den Einzugsbereichen anderer Punkte nicht überlappen sollte. Im Einzugsbereich werden nun so wie bei einer *"*Zielscheibe*"* Abstandsbereiche definiert, die nach Experteneinschätzung bestimmten Gütekriterien entsprechen z.B. sehr hohe, hohe, und gute Übereinstimmung. Wenn jetzt eine neue Zeitreihe gemessen wird, so wird sie (nach 1NN-DTW) einem Datenmuster zugeordnet: i) zu einem neuen Datensatz wird ermittelt, welcher der nächste Nachbar ist, ii) mittels Transformierens, z.B. mit DTW, iii) und zusätzlich, wie gut die Übereinstimmung ausfällt. Damit lassen sich nach vorgefertigten Datenmustern vorgefertigte Fehlermeldungen generieren. Zusammengefasst sollen anwendungsspezifische typische Datenmuster identifiziert werden. Abweichungen davon können vorteilhaft, z.B. mit DTW, identifiziert werden. Der wesentliche Vorteil kann darin liegen, dass man dadurch sofort eine intuitive, auch natürlichsprachlich formulierte Erklärung erhält.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.
Figur 1 zeigt schematisch ein computer-implementiertes Verfahren zum Charakterisieren eines Datensatzes inklusive Transformieren und Zuordnen gemäß einem exemplarischen Ausführungsbeispiel der Erfindung.
Figur 2 zeigt schematisch Datenmuster, von denen jedes für einen anderen spezifischen Datenverlauf indikativ ist, gemäß einem exemplarischen Ausführungsbeispiel der Erfindung.
Figur 3 zeigt schematisch Bewertungskriterien, die mit Datenmustern assoziiert sind, gemäß einem exemplarischen Ausführungsbeispiel der Erfindung.
Figur 4 zeigt schematisch ein Transformieren von dem Datensatz und einem Datenmuster auf eine gemeinsame Basis gemäß einem exemplarischen Ausführungsbeispiel der Erfindung.
Figur 5 zeigt schematisch ein Beschränken der maximalen Größe des Transformierens gemäß einem exemplarischen Ausführungsbeispiel der Erfindung.

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

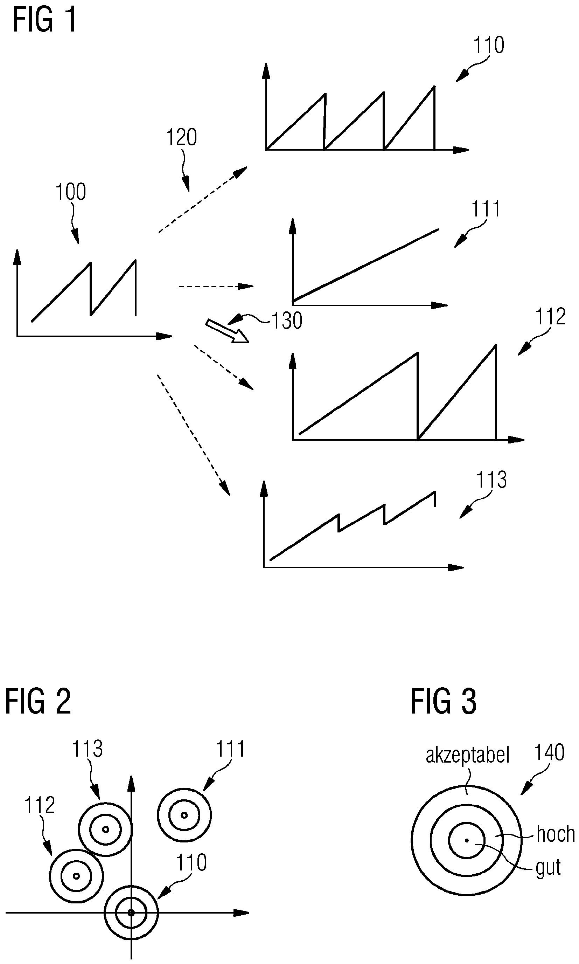

Figur 1 zeigt schematisch ein computer-implementiertes Verfahren zum Charakterisieren eines Datensatzes 100 inklusive Transformieren 120 und Zuordnen 130 gemäß einem exemplarischen Ausführungsbeispiel der Erfindung. Eine Mehrzahl von Datenmustern 110-113 werden identifiziert, wobei jedes Datenmuster 110-113 für zumindest einen spezifischen Datenverlauf indikativ ist, hier: ideales Ereignis 110, kein Ereignis 111, zu langsames Ereignis 112, und unvollständiges Ereignis 113.

Der gemessene (oder auch simulierte) Datensatz 100 wird bereitgestellt, welcher einen Datenverlauf betreffend eine technische Funktion (aus dem Bahnbereich) aufweist. Der Datensatz 100 wird jeweils transformiert 120 zu den genannten Datenmustern 110-113 der Mehrzahl von Datenmustern. Hierdurch gelingt ein Bestimmen der jeweiligen Abweichung. Basierend auf dieser Abweichung kann der Datensatz 100 einem Datenmuster basierend auf der bestimmten Abweichung zugeordnet werden. Im vorliegenden Beispiel kann der Datensatz 100 dem Datenmuster 112 *"*zu langsames Ereignis*"* zugeordnet werden. Entsprechend kann der Datensatz 100 basierend auf der Zuordnung z.B. wie folgt in einer Ausgabe charakterisiert werden: Fehlermeldung: Prüfung mit *"*hoher*"* Verlässlichkeit zu langsam durchgeführt.

Figur 2 zeigt schematisch Datenmuster 110 bis 113, von denen jedes für einen anderen spezifischen Datenverlauf indikativ ist, gemäß einem exemplarischen Ausführungsbeispiel der Erfindung. Die Werte der X- und Y-Achse sind hier zufällig gewählt. Es soll lediglich veranschaulicht werden, dass die unterschiedlichen Datenmuster 110 bis 113 aufgrund ihrer verschiedenen Datenverläufe bezüglich zu untersuchender Parameter gänzlich anders plotten. Entsprechend kann ein neuer Datensatz 100 effizient und eindeutig einem dieser Datenmuster 110 bis 113 zugeordnet werden.

Figur 3 zeigt schematisch ein Charakterisieren 140 eines Datensatzes 100 bezüglich Bewertungskriterien, die mit den Datenmustern 110 bis 113 assoziiert sind, gemäß einem exemplarischen Ausführungsbeispiel der Erfindung. Zu jedem Datenmuster 110 bis 113 wird ein Bewertungskriterium bzw. *"*Einzugsbereich*"* definiert, der sich mit den Einzugsbereichen anderer Datenmuster nicht überlappen sollte. Im Einzugsbereich werden nun in diesem Beispiel wie bei einer *"*Zielscheibe*"* Bewertungskriterien (Abstandsbereiche) definiert, die nach Experteneinschätzung bestimmten Gütekriterien entsprechen z.B. sehr hohe, hohe, gute Übereinstimmung. Ein gemessener Datensatz 100 wird nun basierend auf der Transformation einem Datenmuster und damit auch einem bestimmten Bewertungskriterium zugeordnet.

Damit lassen sich jetzt nach vorgefertigten Datenmustern (vorgefertigte) Fehlermeldungen generieren, z.B.
- Übereinstimmung: Prüfung mit *"*guter*"* Verlässlichkeit korrekt durchgeführt.
- Fehlermeldung: Prüfung mit *"*hoher*"* Verlässlichkeit zu langsam durchgeführt.
- Fehlermeldung: Prüfung mit *"*akzeptabler*"* Verlässlichkeit unvollständig ausgeführt.

Im Fall, dass der neue Datensatz 100 nicht gut zu einem bekannten Datenmuster 110 bis 113 passt, kann eine allgemeine Fehlermeldung ausgegeben werden:
- Unbekannter Fehler: Prüfung mit sehr hoher Verlässlichkeit nicht korrekt ausgeführt. Fehler entspricht keinem bekannten Datenmuster.

Figur 4 zeigt schematisch ein Transformieren 120 von dem Datensatz 100 zu einem Datenmuster 110 auf eine gemeinsame Basis gemäß einem exemplarischen Ausführungsbeispiel der Erfindung. Im gezeigten Beispiel sind die Datenverläufe (Kurven) stark verzerrt bzw. gestreckt. Dem kann entgegengewirkt werden, indem die Daten (Datensatz bzw. Datenmuster) zuerst auf eine vergleichbare gemeinsame Zeitbasis (oder Ortsbasis, etc.) transformiert werden.

Figur 5 zeigt schematisch ein Beschränken der maximalen Größe des Transformierens 120 von dem Datensatz 100 und einem Datenmuster 110 gemäß einem weiteren exemplarischen Ausführungsbeispiel der Erfindung. Ein Parameter, oft Fenster/window genannt, kann die maximale Größe des Transformations-Algorithmus (warping) beschränken. Je geringer das Fenster gewählt wird, desto stärker wird eine exakte Übereinstimmung erzwungen. Der Parameter-Wert wird auf Grundlage von Kenntnissen über die akzeptablen Abweichungen für die Anwendung ermittelt. Das Beispiel zeigt zwei gut passende Datenverläufe (Kurven), die nur leicht verschoben sind (psi). Bis auf wenige Ausnahmen passen die Kurven gut, der mittlere Bereich zeigt das (große) Fenster.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffes sind Personen mit männlicher, weiblicher oder anderer Geschlechtsidentität mit umfasst.

## Patentansprüche

1. Ein computer-implementiertes Verfahren zum Charakterisieren eines Datensatzes (100), insbesondere im Bereich der Schienen-gebundenen Infrastruktur, das Verfahren aufweisend:
Identifizieren einer Mehrzahl von Datenmustern (110-113), wobei jedes Datenmuster (110-113) für zumindest einen spezifischen Datenverlauf indikativ ist;
Bereitstellen von dem, insbesondere gemessenen, Datensatz (100), welcher einen Datenverlauf aufweist, der eine technische Funktion betrifft;
Transformieren (120) des Datensatzes (100) zu den Datenmustern (110-113) der Mehrzahl von Datenmustern und dadurch Bestimmen der jeweiligen Abweichung;
Zuordnen (130) des Datensatzes (100) zu einem Datenmuster (110-113) der Mehrzahl von Datenmustern basierend auf der bestimmten Abweichung; und
Charakterisieren (140) des Datensatzes (100) basierend auf der Zuordnung.

2. Das Verfahren gemäß Anspruch 1, wobei der Datenverlauf des Datensatzes (100) eine technische Fehlfunktion aufweist, und wobei das Charakterisieren (140) aufweist:
Charakterisieren der technischen Fehlfunktion.

3. Das Verfahren gemäß Anspruch 1 oder 2, ferner aufweisend:
Ausgeben der Charakterisierung, insbesondere in Textform und/oder Sprachform, wobei die Ausgabe eine Information enthält, die mit einer von Menschen ausgegebenen Information vergleichbar ist.

4. Das Verfahren gemäß einem beliebigen der vorhergehenden Ansprüche,
wobei das Transformieren (120) einen Dynamic Time Warping, DTW, Algorithmus, und/oder einen Optimal Transport Theory, OTT, Algorithmus, aufweist.

5. Das Verfahren gemäß einem beliebigen der vorhergehenden Ansprüche, wobei das Verfahren, insbesondere das Transformieren (120) und/oder das Charakterisieren (140), das Verwenden eines künstliche Intelligenz, KI, Algorithmus aufweist.

6. Das Verfahren gemäß einem beliebigen der vorhergehenden Ansprüche,
wobei der Datensatz (100), insbesondere der Datenverlauf, eine Zeitreihe aufweist, insbesondere betreffend zumindest eines von: Stromverbrauch, Weichenantrieb, Schrankenantrieb, Achszähler, Klimaanlage, Temperaturverlauf, Lüftung.

7. Das Verfahren gemäß einem beliebigen der vorhergehenden Ansprüche,
wobei die Mehrzahl von Datenmustern (110-113) zumindest einen Datenverlauf bezüglich einem der folgenden Ereignisse aufweist: einem erwünschten Ereignis (110), keinem Ereignis (111), einem zu langsamen Ereignis (112), einem zu schnellen Ereignis, einem unvollständigen Ereignis (113).

8. Das Verfahren gemäß einem beliebigen der vorhergehenden Ansprüche,
wobei jedes Datenmuster (111-113) der Mehrzahl von Datenmustern mit einem Bewertungskriterium, insbesondere einem Sicherheitskriterium, assoziiert ist,
insbesondere wobei jedes Bewertungskriterium einen Bewertungsbereich umfassen, und wobei die Bewertungsbereiche im Wesentlichen nicht überlappen oder zumindest teilweise überlappen.

9. Das Verfahren gemäß einem beliebigen der vorhergehenden Ansprüche, wobei das Identifizieren der Datenmuster (110-113) aufweist:
Auswerten von modellierten und/oder gemessenen Datensätzen.

10. Das Verfahren gemäß einem beliebigen der vorhergehenden Ansprüche,
wobei das Transformieren (120) sich im Wesentlichen auf die Form des jeweiligen Datenverlaufs bezieht.

11. Das Verfahren gemäß einem beliebigen der vorhergehenden Ansprüche, wobei das Transformieren (120) ferner aufweist:
Angleichen von dem Datensatz (100) und/oder von zumindest einem Datenmuster (110-113) zu einer gemeinsamen Basis, insbesondere bezüglich Zeit und/oder Ort.

12. Das Verfahren gemäß einem beliebigen der vorhergehenden Ansprüche, wobei das Transformieren (120) ferner aufweist:
Unterdrücken von einem Teil von dem Datensatz (100) und/oder von zumindest einem Datenmuster (110-113), insbesondere zu Beginn und/oder zum Ende des Datenverlaufs; und/oder
Beschränken des maximalen Umfangs des Transformierens (120) .

13. Das Verfahren gemäß einem beliebigen der vorhergehenden Ansprüche, ferner aufweisend:
Bilden eines Mittelwerts basierend auf Abweichungen von einem erwünschten Datenmuster, um dadurch eine charakteristische Fehlfunktion, insbesondere den Datenverlauf der charakteristischen Fehlfunktion, zu bestimmen.

14. Eine Vorrichtung zur Datenverarbeitung, welche zumindest einen Prozessor aufweist, und welche eingerichtet ist das Verfahren gemäß einem beliebigen der Ansprüche 1 bis 13 auszuführen.

15. Ein Computerprogrammprodukt, welches Befehle aufweist, die bei der Ausführung des Programms durch einen Computer diesen veranlassen, das Verfahren gemäß einem beliebigen der Ansprüche 1 bis 13 auszuführen.
